# EUROPEAN PATENT APPLICATION

(11) **EP 1 447 389 A1**
(43) Date of publication of application: **18.08.2004**
(21) Application number: 02779584.8
(22) Date of filing: 11.10.2002
(51) Int. Cl.: C03C 15/00, B05D 5/02

(54) **GLASS ETCHING METHOD**

(30) Priority: 11.10.2001 ES 200102270
(71) Applicant: F & M Mateados de Cristal, S.L., 03006 Alicante (ES)
(72) Inventor: MANZANO RAMON, Antonio, E-03006 Alicante (ES)
(74) Representative: Gonzalez-Mogena Gonzalez, Inigo
(86) International application number: PCT/ES2002/000481
(87) International publication number: WO 2003/031361

(57) **Abstract**

A glass pearling process that comprises the following stages: position the glass horizontally, clean the glass with distilled water and brushes, dry using air pressure jets, apply an adhesive plastic sheet to the lower face of the glass that is acid resistant;
apply adhesive safety tape to the edges of the glass from the attached plastic sheet in such a way that it extends upwards and of the upper surface, apply an acid bath to the upper surface of the glass in a curtain sheet/waterfall manner and in such a way that the acid remains dammed up by the upper surface of the glass and the upwardly extending edges of the adhesive tape, leave the acid to work for a pre-determined period of time, drain the surplus acid, perform a and a wash with water and brushes, dry using air pressure jets and carry out a visual inspection of the result.

## Description

### OBJECT OF THE INVENTION

This invention involves the glass pearling process.

### BACKGROUND TO THE INVENTION

The pearling of glass pieces (plate glass) is presently carried out by means of immersing them vertically in an acid bath, having protected the parts thereof that one does not wish to be treated by covering them with plastic strips that are resistant to the acid.

This makes it inconvenient when it comes to making a form of pearling that illustrates figures and/or drawings. There is likewise the additional inconvenience of the fact that it is necessary to submerge the plate glass in an acid bath, with both sides being treated. This involves a greater use of acid and/or manpower and material to protect the parts that one does not wish to be treated.

### DESCRIPTION OF THE INVENTION

The invention process is used in an optimum manner for glass pearling, since by this means the acid is only exposed to one of its sides. There is furthermore, optionally, a rapid and cheap form of protection against the treatment, simplifying the pearling process that illustrates figures and/or drawings.

In accordance with the invention, the process entails:
- placing the glass plate horizontally, preferably on a bed of rollers.
- running the plate glass over the rollers towards a rinsing machine, inside which some traction rollers that move it along through a brushing zone where it is subjected to distilled water pressure jets, and then dried by air pressure jets.
- optional preparation of serigraphy on the upper side of the plate glass by using acid-resistant dyes, which represent the figures that will then appear non-pearled on the finished glass plate.
- fixing of a plastic adhesive (acid-resistant) on the lower side of the glass plate.
- Protection of the plate glass edges by means of applying adhesive tape. This adhesive tape also ensures that the plastic sticks to the lower side of the plate glass, preventing it from coming loose. The adhesive tape also sticks in such a way that it overhangs at the sides and the top, along all the upper side of the plate glass, so as to constitute a form of damming for the subsequent application of the acid.
- treatment of the glass plate, by inserting it into an acid bath, with acid poured in a curtain sheet/waterfall manner, in a hermetically sealed cabin. This is done in such a way that the plate glass is dammed up on its upper side, so as not to treat the lower side, the edges or the areas in which the serigraphy was applied. The plate glass continues to dam up the acid for a pre-determined period of time, with the acid subsequently running off and/or being removed from its surafce area.
- washing of any serigraphed areas, as appropriate, by means of solvent jet-spraying of dyes and brushing off of the same.
- final washing, which comprises a pre-wash and a wash, by means of undistilled water jet-spray and brushing, with subsequent drying by means of air pressure jets.
- removal of the adhesive tape and of the plastic adhesive, and examination and inspection of the plate glass.
- stacking, and protection of said stacking by means of automatic cut sheets of paper which are placed between the stacked sheets of plate glass.

### BRIEF DESCRIPTION OF THE DRAWINGS

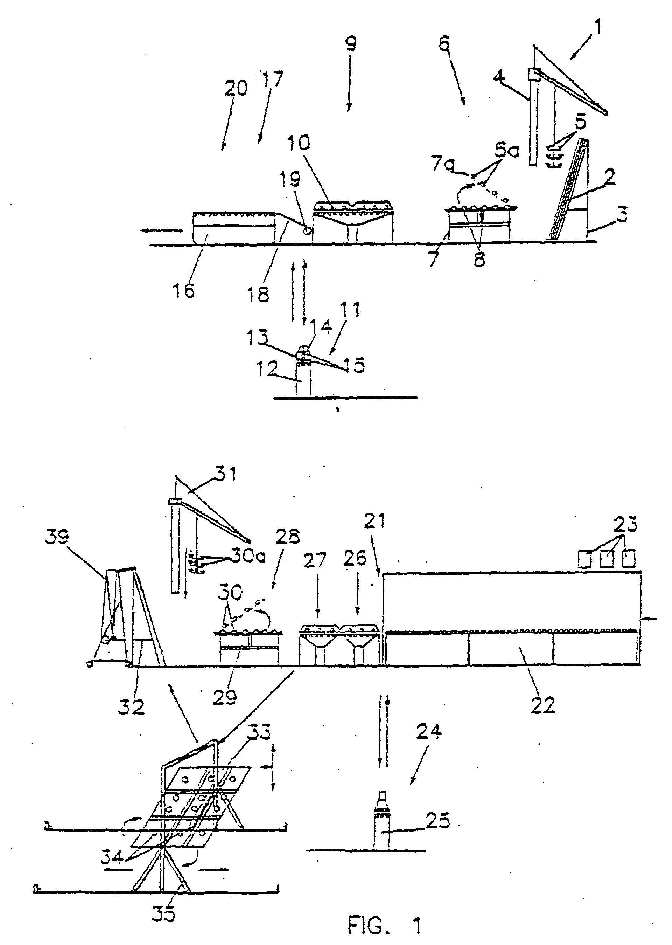

Figure 1 shows the process of the invention in diagrammatic form.

### BRIEF DESCRIPTION OF THE PRACTICAL USE OF THE INVENTION

The process of the invention firstly covers capture 1 of the plate glass to be treated, the stacking 2 of the same in a trestle 3, by means of a winch 4, having vacuum valves 5, that are fixed to the plate glass on one of its sides. Said valves 5 consist of an elastic concave body with a conduit that leads to the inside with a vacuum pump, in such a way that it is possible to control the attachment and non-attachment actions.

Then, the process comprises the depositing 6 of the plate glass on a board 7 of rollers consisting of a collapsible frame 7a, with vacuum valves 5a, the frame being re-assembled 7a so as to be placed fully on to the plate glass. Its valves 5a are attached to the opposite side of the same. The valves that hang from the winch 4 then being loosened and the frame being collapsed until the plate glass is placed horizontally on the rollers 8 of the bed 6.

The process then comprises the washing 9 of the plate glass, which is then pushed on rollers 8, until it is inserted into a machine 10 that sprays distilled water at jet pressure onto it and brushing by means of rotating brushes. It is then dried by means of air pressure jets.

If one wishes the pearling process to leave areas (drawings) untreated, any optional serigraphy 11 is then applied to the upper side of the plate glass with acid-resistant dye. The serigraphy is applied by means of a machine 12 with a rubber roller 13 that incorporates the drawing to be serigraphed. This is fed from the dye stored in a tank 14, by means of PVC rollers 15.

The plate glass is then placed onto another bed 16 of rollers, where the application 17 of a sheet 18 of acid-resistant plastic is made from a reel 19 to the lower side of the plate glass. Likewise, the application 20 of the acid-resistant adhesive tape, not shown, is made to the edges of the plate glass. This is done in such a way that said adhesive tape overhangs the upper part of the plate glass along the perimeter, forming a damming up of the acid on that side.

Then the treating 21 of the upper side of the glass takes place. The plate glass is put into a hermetically-sealed cabin 22 in which the acid is poured in a curtain sheet and/or waterfall manner over the upper side of the plate glass from the tanks 23 above. The acid remains dammed up on said upper side and is left to work for a pre-determined period of time. The pouring of the acid in waterfall and/or curtain sheet form only takes place when the plate glass is passed under it, due to sensors within the cabin which are not shown.

Once the treatment time has passed, the plate glass is moved towards the exit of the cabin 22, the acid being swept off its surface by means of sealed bars, not shown, to some collection trays, not shown. From there the acid is again propelled towards the deposits 23, where its degree of acidity is controlled and re-composed as necessary.

The optional cleaning 24 of the serigraphed dye takes place at the exit from the cabin, by means of a machine 25 that contains injectors, not shown, of a dye solvent product and rotating brushes, not shown.

A pre-wash 26 and a washing 27 of the plate glass then takes place, with jets of undistilled water and rotating brushes, not shown, so as to eliminate the acid and/or dye residues.

The sheet of plastic and/or the adhesive tape is then removed 28, and the visual inspection of the result takes place. For this it is preferable for the plate glass to be deposited on a bed 29 of rollers with a collapsible frame with vacuum valves 30. These are re-assembled so that the plate glass can be subsequently picked up by vacuum valves 30 suspended from a winch 31 and deposited on a trestle 32. Likewise, the inspection and the placing of the plate glass from the trestle can be carried out by a rotating platform 33 with vacuum valves 34, mounted on a rolling base 35.

When the plate glass sheets are stacked, a machine 39 automatically deposits and cuts sheets of protective paper thto be placed between them.

## Claims

1. A glass pearling process that is **characterised by** covering the following stages: the glass is placed horizontally; the glass is washed with distilled water and brushed, and it is then dried by air pressure jets; a plastic adhesive sheet that is resistant to the acid is the applied to the lower side of the glass; a fixing adhesive tape is then applied to the edges of the glass, in such a way that it overhangs the upper part and along the perimeter of the surface of the upper side; an acid bath in curtain sheet and/or waterfall form is applied to the upper side of the glass, in such a way that the acid is dammed up on the upper side of the glass and the overhanging borders above the adhesive tape. The acid is left to work for a pre-determined period of time; the excess acid runs off; a pre-wash and a wash with water and brushes are carried out, and it is then dried with air pressure jets; a visual inspection of the result is carried out.

2. Process as in claim 1 above, **characterised by** the application of a serigraphy with acid-resistant dye to the upper side of the glass before the treatment is carried out.

3. Process as in claim 2 **characterised by** a cleaning of the serigraphed areas being carried out, by using dye solvent products, and brushing off the residue of the same, after the treatment and before the pre-wash and wash take place.
